Europäisches Patentamt

European Patent Office

Office européen des brevets

(19)

(11) Publication number: 0 210 702
A1

# (12) EUROPEAN PATENT APPLICATION

(21) Application number: 86201276.2

(22) Date of filing: 18.07.86

(51) Int. Cl.⁴: A01G 31/02

(30) Priority: 22.07.85 NL 8502104

(43) Date of publication of application:
04.02.87 Bulletin 87/06

(84) Designated Contracting States:
AT BE CH DE FR GB IT LI LU NL SE

(71) Applicant: FLOWMAGIC B.V.
Oberlaan 7
NL-2681 PH Monster(NL)

(72) Inventor: van der Ende, Johan Udo
7, Oberlaan
2681 PH Monster(NL)

(74) Representative: Mathol, Heimen et al
EXTERPATENT Willem Witsenplein 4
NL-2596 BK 's-Gravenhage(NL)

(54) Deep-drawn plastic-material holder, in particular substrate tray, and also system of such trays, and a supporting piece from said system.

(57) A deep-drawn plastic-material holder such as a substrate tray or pot (1) comprising a base (2) and a peripheral wall (3) with a circumferential edge (7), the base or bottom comprising one or more elevations (4) spaced from the peripheral wall, the upper side (5) of said elevations lying below the level of the circumferential edge, thus reducing at least 30% the volume of the holder.

FIG:2.

## Deep-drawn plastic-material holder, in particular substrate tray, and also system of such trays, and a suppporting piece from said system.

The invention relates to a deep-drawn plastic-material holder, such as a cultivation tray or pot provided with a base and an upright peripheral wall with a circumferential edge. Such trays or pots are known in many constructions, for example square, round, rectangular or oval, and are an important aid in gardening for the cultivation of plants of the obtaining of flowers or fruits thereby. The known holders are beset, however, with a drawback, which is increasing with modern nursery cultivation, of a disproportion between the usable volume of the holder and the cultivation volume ideally required for the culture concerned.

A difficulty from the point of view of finding the correct ratio between the dimensions of the holder and the cultivation volume ideal for the intended plants is presented by the minimally required depth of the holder which is necessary for the root formation of the plant. A reduction of the volume of the tray cannot therefore be found in a reduction of the height of the tray in view of the depth of the cultivation soil or subtrate required for any plant.

The object of the invention is to provide a holder which makes a reduction of the cultivation volume possible in spite of the limitations specified above. To this end, the invention starts from a cultivating tray disclosed in NL-A-8105726 said known tray being provided with a base, an upright upwardly diverging peripheral wall with a circumferential edge, a portion of the base being constructed with at least one elevation, the top of which is below the level of the circumferential edge. This elevation serves for the support of a mat of rockwool well above the base of the tray, the free space below the mat having hardly any useful purpose. The elevation merges into opposite walls of the tray.

The invention aims at reducing the cultivation volume i.e. the amount of soil or substrate required for each plant i.e. the amount of soil or substrate required for each plant. This object is achieved in that the (each) elevation remains spaced from the peripheral walls and is shaped in an upwardly converging manner so that a wedge-shaped (in section) space is present within the holder and the freely fillable capacity of the tray is reduced by at least 30%. As a result of said measure any desired reduction in volume of the holder, or cultivation tray or pot, can be obtained without affecting the depth of the holder. Bij this means an increase is likewise obtained of the ratio between the volume of the holder and the wall surface, which may be useful from the point of view of the heat transfer between the atmosphere and the contents (soil + roots) of the holder. The proposed shaping makes a "nesting" of holders possible, which means that empty holders can be stacked on top of eachother and at the same time slide into eachother in order to make possible in this manner a substantial reduction in volume during transport and storage.

In a beneficial embodiment of the holder according to the invention the top of the (each) elevation has a somewhat countersunk section. This shaping is of importance for providing germinating plants with water, this being with a view to the first root formation. Bij using the somewhat countersunk section of the top of the elevatio unimpeded water supply can take place, the excess of water flowing away to lower sections of the holder which may or may not be filled with soil or substrate. If at the same time the side wall of the (each) elevation is provided with a perforation a height limitation of the water level in the tray can consequently be obtained. Said perforations also promotes an aeration of the plant roots by allowing an air circulation.

In particular, the invention relates to a socalled substrate tray, the peripheral edge of which is rectangular. According to the invention a number of mutually simular and parallel elevations are present therein of a type auch that the free, fillable capacity of the tray is reduced by approximately 1/3. Such a tray may form the basis for a very compact use of a cultivation room (hothouse or similar workplace) if such trays are set up in such a room in rows linked together. The reduction in volume of each tray produces an important saving in substrate such as rockwool or foam flakes, while the weight of each filled tray is also reduced. Moreover, a simplification of the provision of water can be achieved in the specified manner and the heat exchange with the atmosphere present inside the workroom is increased.

The base of the substrate tray may also be provided with a deepened section in a manner such that the tray is also usable in the inverted position. This provides the possibility of using the tray with a reduction in capacity which is, for example, 35% or 65% depending on the position in which the tray is used.

The invention also relates to a system of substrate trays of the type as described above in which the edge of at least one of the circumferential edges of each tray is provided with a sidewardly projecting prolongation and in which two adjacent trays are joined to eachother by means of a wedge-shaped supporting piece which fits between the two trays. A substantial working area can be put together by this means, and a very efficient use of the available working floor area achieved. According to one embodiment the height of each supporting piece is a multiple of the depth of a tray in a manner such that each tray is located at the working level.

The supporting piece may also be constructed in a manner such that one or more roller elements are mounted at thea wide bottom so as to interact witha tube or rod lying parallel to the ground surface. By placing said tubes at a certain height, a row of coupled trays can be rolled and still more intense use can be made of the available floor area because any required working path can be brought about by sliding the adjacent rows of subtrate trays to and fro in the correct manner.

The invention will be explained in more detail by reference to the drawing which shows a number of embodiments of the holder or the system to be obtained therewith.

Figure 1 is a perspective view of a round holder which forms a substrate tray corresponding to the conventional flower pot.

Figure 2 is also a perspective view of a rectangular substrate tray.

Figures 3a, 3b and 3c show a plan view and two side views at 90° to eachother of a substrate tray according to the type in Figure 2.

Figure 4 is a section on enlarged scale along a plane IV-IV in Figure 3a.

Figure 5 is an inverted tray drawn in perspective.

Figure 6 shows the system of substrate trays which are coupled to eachother inrows and can be displaced sidewards.

Figure 7 is a section through a supporting element which can be used in the system according to Figure 6. '

Figure 8 is a supporting element constructed as a pylon.

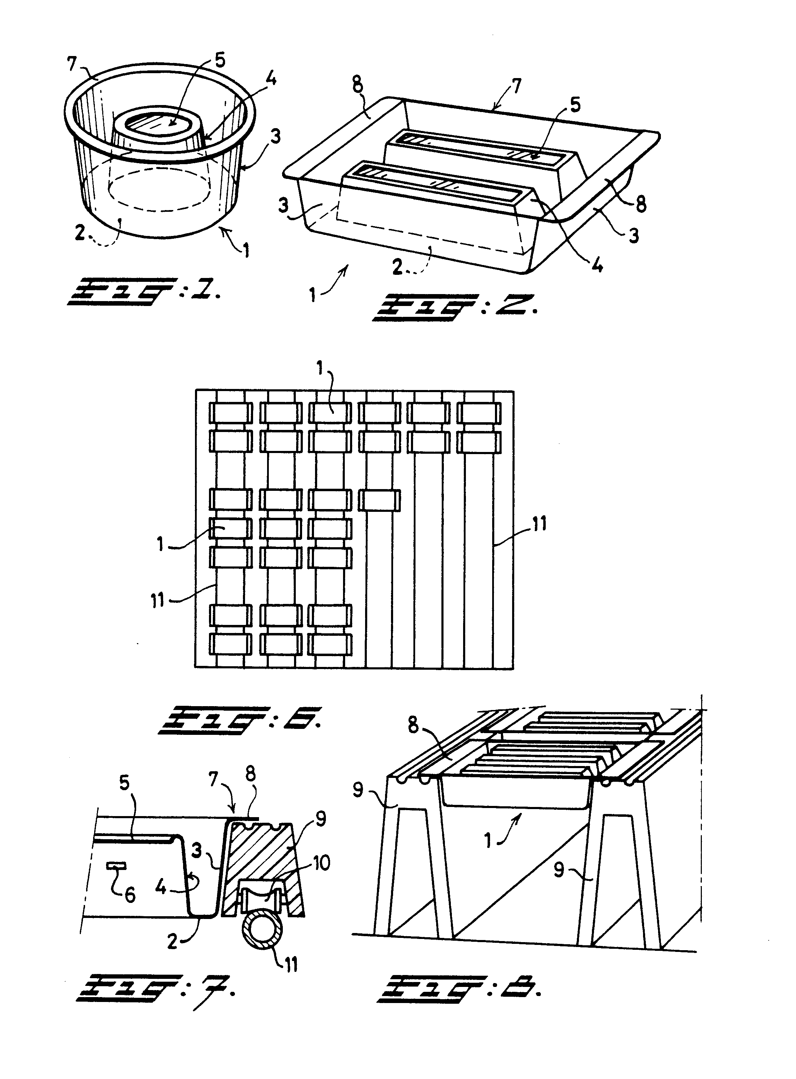

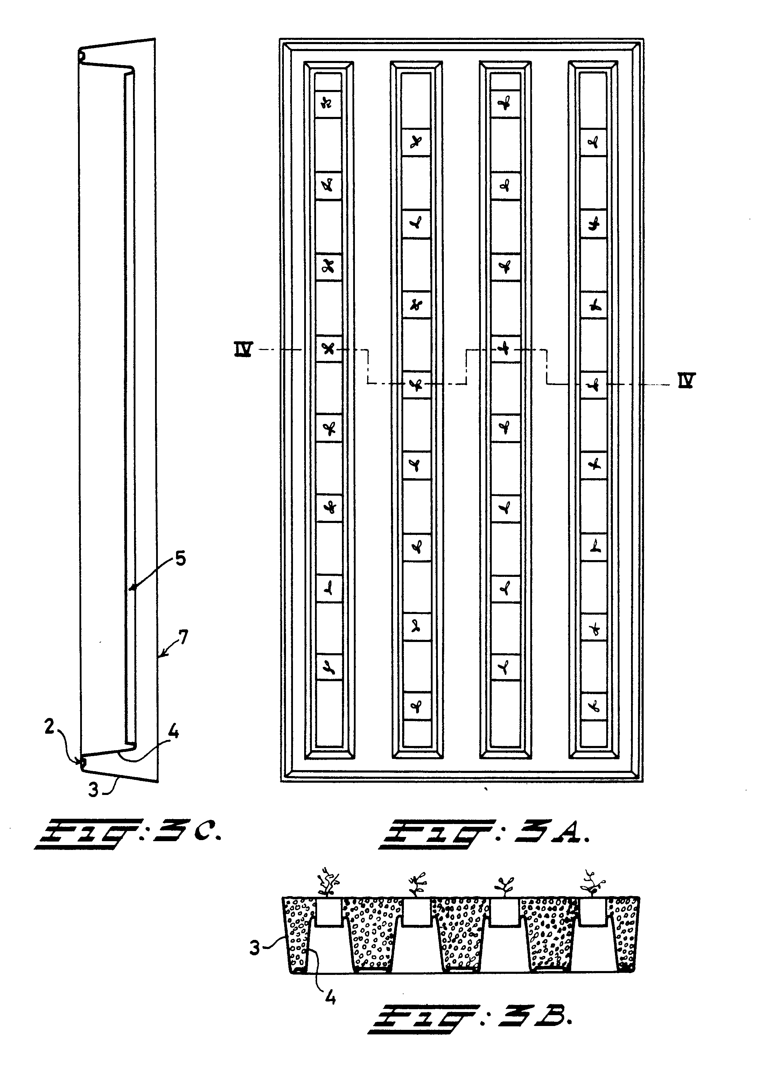

As is most clearly to be seen in Figures 1 and 2, the holder may be of rectangular or round, and possibly of square of elliptical, construction and consists of a deep-drawn plastic-material holder 1 provided with a base 2 and an upright side wall 3. A portion of the base 2 is constructed with at least one elevation 4, the top of which is below the level of the peripheral edge of the side wall 3. Said elevation which remains spaced from the wall 3 forms a counter-profile by means of which no limitation in the depth of the holder is caused, but a reduction of the volume thereof is indeed obtained. This is important for an unhampered root development.

The side wall 3 is constructed in an upwardly diverging manner and the elevation(s) 4 is (are) shaped in an upwardly converging manner so that a wedgeshaped (in section) space is present within the holder 1. In said embodiment the substrate trays obtained in this manner are fullly nestable so that transport and storage does not give rise to any problems. The angel of divergence and convergence is approx. 5° to 7.5°.

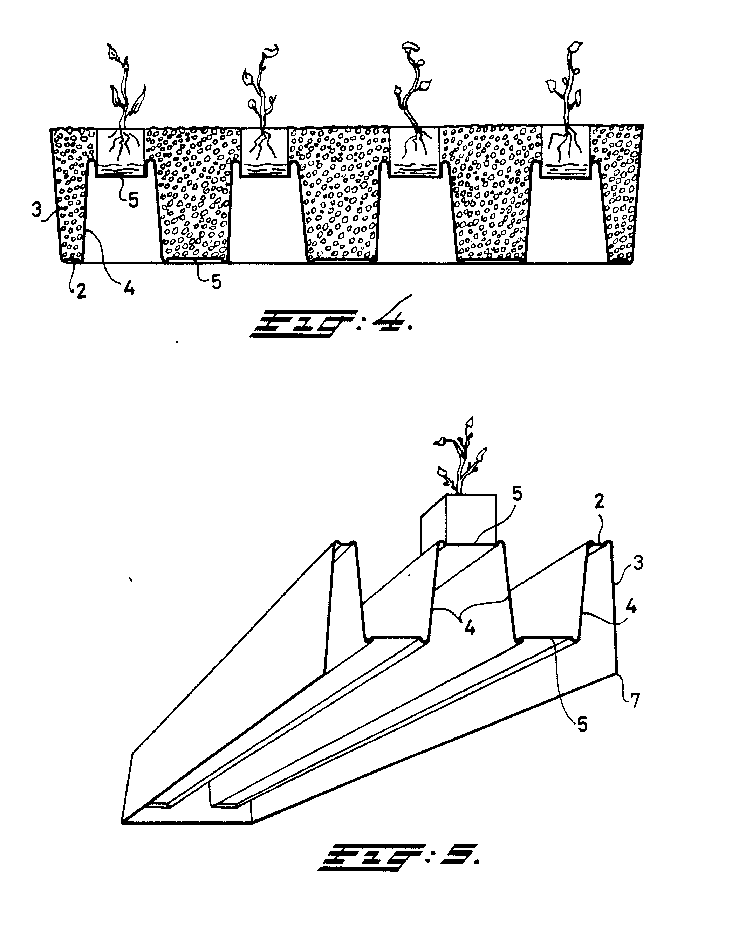

As can be seen in Figures 3 and 4, the top of each elevation 4 is provided with a somewhat deepened countersunk section 5. In this manner the possibility is created of producing a small trough on said elevation 4 in which small germinating plants may be placed. In the trough or deepened section 5 water can be placed so that root formation may take place, see Figure 4,

In the side wall of each elevation 4 a perforaration 6, for example a few holes or slots, may be provided (see Figure 7). When the holder is in use, the wedge-shaped space is usually filled with soil or substrate consisting of rockwool or foam flakes (see Figure 4). The perforations 6 have a dual purpose, viz. to allow air into the substrate and to drain water as soon as it rises above the height of the perforation. In this manner excess water originating from the troughs 5 at the top of the elevations 4 can be removed.

In addition to the advantage of the reduction in volume of the holder 1 by using the elevation 4 - (and the saving in substrate obtained therewith) the associated beneficial effect of an increase of the base area occurs so that a better thermal exchange is obtained between the substrate on the one hand and the surrounding atmosphere on the other.

The base 2 may also be provided with a deepened section 5 so that the tray is also usable in the inverted position. This is of importance inter alia in the cultivation of tomatoes in view of the fact that in that case the substrate is provided with a very high EC (Electrolytic Concentration) in the first four weeks of growth in order to accelerate bunch formation. For this purpose the plants are placed in the deepened section 5 and after the first period of four weeks has elapsed are moved to the substrate in the wedge-shaped intervening space. This inverted use can be seen in Figure 5 and makes the tray particularly suitable for the cultivation of tomatoes.

Figure 6 shows a system of substrate trays which can be used, for example, in a flower or plant house, the upper edge 7 of at least one of the side walls of each tray being provided with a sidewardly projecting prolongation 8. Two adjacent trays are then linked to eachother by means of a wedgeshaped supporting piece 9 fitting between the two trays. At the wide bottom of said supporting piece 9 one or more roller elements 10 can be mounted so as to interact with a tube or rod 11. In this manner the substrate trays may be placed on small rollers as shown in Figure 6. By this means a very efficient and compact use of the working surface can be obtained, the heat supplied to one house being used by a larger number of plants than is possible if fixed trays are used.

According to Figure 8 the supporting pieces 9 may have a height which is a multiple of the depth of a tray in a manner such that each tray is at the working level, i.e. approx 75 cm above the ground. In view of the fact that both the trays and the supporting pieces and other accessories may be manufactured from plastic material, the risk of rust or rotting is consequently prevented while, moreover, decontamination of the trays can easily be performed. The dimensions of the trays may have any value, but a preferred embodiment has a length of approx. 2m and a with of 1 m while the depth of the tray is 20 cm. With a correct choice of the plastic sheet material from which the tray is approx. 7 to 10 kg and of a tray filled with substrate approx. 12-18 kg.

## Claims

1. Deep-drawn plasic-material holder, such as a cultivation tray or pot provided with a base, an upright, upwardly diverging peripheral wall with a circumferential edge, a portion of the base being constructed with at least one elevation, the top of which is below the level of the circumferential edge, characterized in that the (each) elevation (4) remains spaced from the peripheral wall (3) and is shaped in an upwardly converging manner so that a wedge-shaped (in section) space is present within the holder and the freely fillable capacity of the tray is reduced by at least 30%.

2. Holder such as a tray or pot according to claim 1, characterized in that the top of the (each) elevation (4) is provided with a somewhat countersunk section (5).

3. Holder such as a tray or pot according to one of the preceding claims, characterized in that the side wall of the (each) elevation (4) is provided with a perforation (6).

4. Substrate tray according to one of the preceding claims, the peripheral edge of which is rectangular, charcterized in that a number of mutually similar and parallel elevations (4) are present.

5. Substrate tray according to claims 4 and 2, charactirized in that the base (2) is also provided with a countersunk section (5) in a manner such that the tray is also usable in the inverted position.

6. System of substrate trays according to claim 4, characterized in that the upper edge (7) of at least one of the side walls of each tray is provided with a sidewardly projecting prolongation (8) and that two adjacent trays are linked to eachother by means of a wedge-shaped supporting piece (9) is a multiple of the depth of a tray (1) in a manner such that each tray is located at working level.

8. Supporting piece from the system according to claim 6, characterized in that at the wide bottom one or more roller elements (10) are mounted so as to interact with a tube or rod (11) lying parallel to the ground surface.

Fig: 1.

Fig: 2.

Fig: 6.

Fig: 7.

Fig: 8.

FIG: 3C.

FIG: 3A.

FIG: 3B.

_FIG: 4._

_FIG: 5._

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| A | NL-A-8 105 726 (DINGS)<br>* Claim 1; figure 1 * | 1 | A 01 G 31/02 |
| A | US-A-4 037 362 (FINCK)<br><br>* Column 3, lines 15-55; figure 1 * | 1,4,6,8 | |
| A | US-A-4 236 350 (HASSELBACH)<br>* Column 2, lines 12-35; figure 4 * | 1,4 | |
| A | FR-A-2 397 146 (MADSEN)<br><br>* Page 2, line 35 - page 3, line 23; figures 1,2 * | 1,4,6,8 | |
| A | DE-A-1 507 005 (POCACHARD)<br>* Page 2, paragraph 2 - last paragraph; figure 1 * | 1,3 | TECHNICAL FIELDS SEARCHED (Int. Cl.4)<br><br>A 01 G |

The present search report has been drawn up for all claims

| Place of search | Date of completion of the search | Examiner |
|---|---|---|
| THE HAGUE | 03-11-1986 | HERYGERS J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82